# DEMANDE DE BREVET EUROPEEN

(11) **EP 1 489 573 A1**
(43) Date de publication de la demande: **22.12.2004**
(21) Numéro de dépôt: 04102721.0
(22) Date de dépôt: 15.06.2004
(51) Int. Cl.: G08B 21/04, H05B 37/02

(54) **Système et procédé d'auto-apprentissage pour le règlage de l'état de fonctionnement d'une installation.**

(30) Priorité: 16.06.2003 FR 0350220
(71) Demandeur: Electricité de France Service National, 75008 Paris (FR)
(72) Inventeur: BAILLY, Noel, 77920, SAMOIS SUR SEINE (FR); DUMAS, Arnaud, 78290, CROISSY SUR SEINE (FR); BENARD, François, 89340, SAINT AGNAN (FR); ESTEVE, Daniel, 31520, RAMONVILLE SAINT AGNE (FR); SCOTTO DI RINALDI, Jean-Philippe, 31500, TOULOUSE (FR)
(74) Mandataire: Poulin, Gérard

(57) **Abrégé**

L'invention concerne un système et un procédé anticipatifs de réglage des états de systèmes/équipements et/ou de détection de situations spécifiques ou anormales d'équipements et/ou de personnes. Ce système comprend :
- des moyens de détection directe ou indirecte de l'occupation d'une zone spatiale pendant une période de temps donnée,
- des moyens d'acquisition de valeurs de réglage des états des systèmes/équipements,
- des moyens de traitement préliminaire des informations physiques obtenues, et de mémorisation de données,
- des moyens de traitement à caractère statistique de la valeur de probabilité de présence/activité/état de la personne,
- des moyens d'affectation de seuils,
- des moyens d'observation en temps réel d'indicateur de présence/activité/état de la personne permettant de décider d'éventuelles des actions à entreprendre selon les applications traitées,
- des moyens de compression,
- des moyens d'observation, de stockage et de traitement des valeurs de réglage des états de systèmes/équipements.

## Description

### DOMAINE TECHNIQUE

La présente invention concerne un système et un procédé anticipatifs de réglage des états de systèmes/équipements et/ou de détection de situations spécifiques ou anormales d'équipements et/ou de personnes, pour satisfaire aux besoins exprimés par un ou plusieurs individus.

Une telle estimation de présence peut être utilisée pour la programmation et la commande d'équipements, et notamment pour gérer des fonctions, telles que le chauffage, présentant un certain temps de mise en régime en anticipant une mise en route ou un arrêt de ces fonctions, c'est-à-dire en anticipant la période de présence d'un occupant. Elle peut également être utilisée pour la détection de situations spécifiques ou anormales encourues par des individus dans des locaux professionnels ou domestiques.

Dans la suite le terme « présence » couvre la présence des personnes et l'activité de ces dernières caractérisée soit par son niveau (agitation, immobilité..) soit par son type (déambulation, entrée, sortie, repos, sommeil,..). Le terme « présence » couvre aussi l'état physiologique (maladie, en forme, ...) ou psychique (détente, stress, ...) de la personne présente. Le terme « détection » signifie alors l'acquisition d'un signal physique représentatif de l'état psychique ou physiologique de la personne.

### ETAT DE LA TECHNIQUE ANTERIEURE

L'invention concerne ainsi, dans un premier mode de réalisation, la programmation et la commande d'équipements, électriques ou non, qui peuvent être un ou plusieurs des équipements suivants : équipements de sécurité, équipements de chauffage, de climatisation, de ventilation, de sonorisation, de visualisation, d'éclairage, d'automatismes (volets, portes...) ... situés dans différentes zones de locaux professionnels ou domestiques. Pour simplifier la description, on considère dans la suite, à titre d'exemple, la commande d'équipements électriques de chauffage.

L'invention concerne, dans un second mode de réalisation, la détection multisensorielle de situations spécifiques (stress, détente, maladie, ...) ou anormales (chute, fugue, accidents, ...) encourues par des individus évoluant dans un environnement délimité (personnes hospitalisées, personnes âgées à domicile, animaux dans un zoo, ...).

### A- Premier mode de réalisation : Commande d'équipements basée sur la répétitivité d'habitudes

La programmation et la commande d'équipements peut ainsi, dans le cas du chauffage, consister à réduire la température dans des locaux lorsque les occupants sont absents ou lorsqu'ils souhaitent diminuer la température, par exemple la nuit, et à assurer à un moment voulu une température de confort désirée qui peut être fonction de l'état (psychique, physiologique, ...) de la personne. Une telle programmation permet d'optimiser les coûts, et de réaliser des économies d'énergie tout en assurant le confort demandé par les occupants.

Les occupants de locaux professionnels ou domestiques peuvent être amenés, en effet, du fait de la répétitivité de leurs activités, à réaliser la programmation des équipements concourant à la création des ambiances et à la sécurité. Cette programmation est souvent délicate à réaliser et se limite le plus souvent à distinguer deux niveaux d'occupation des locaux : vide, occupé. Le développement de l'électronique et de l'informatique permet de proposer des solutions basées sur une prédiction des états de ces équipements, qui passe d'abord par la prévision des périodes d'occupation de ces locaux.

Les systèmes de l'art connu font, le plus souvent, appel à une programmation fixe dans la mise en oeuvre des fonctions gérant le confort et la sécurité. Une telle programmation suppose une planification temporelle. Ainsi, on peut programmer de mettre en route le chauffage à un instant donné si l'on estime être présent dans les locaux. De tels systèmes sont contraignants car la programmation d'un équipement suppose, même s'il s'agit de procédures simples, une connaissance du mode de fonctionnement de cet équipement et une connaissance de son interface homme-machine et de la logique sous-jacente. Une telle contrainte peut être encore plus forte si l'on considère que l'on doit, suite à un changement de modes de vie, corriger la programmation initiale.

Un document, référencé [1] en fin de description, décrit ainsi la programmation d'un équipement de chauffage dans un bâtiment. Ladite programmation doit être effectuée sur place.

Une telle programmation est relativement simple à réaliser lorsqu'elle est journalière et s'adresse à l'ensemble d'un bâtiment : elle est alors dite "mono-zone journalière". Sa réalisation devient rapidement complexe lorsqu'elle est hebdomadaire et multi-zones. Mais elle peut laisser alors plus de liberté à un occupant qui peut en tirer un meilleur parti financier.

Une telle programmation ne permet pas, le plus souvent, d'optimiser le fonctionnement des équipements et donc le coût, par exemple du chauffage, car elle ne tient pas compte de paramètres physiques, tarifaires ou climatiques, qui ne sont pas facilement accessibles à l'occupant.

Un autre document de l'art connu, référencé [2], décrit un gestionnaire autoconfigurable qui effectue seul l'apprentissage des caractéristiques thermiques d'un bâtiment, des besoins de confort de ses occupants et de leurs horaires d'occupation, et assure l'anticipation des commandes. Ce gestionnaire comporte des moyens de commande d'un générateur de conditionnement d'ambiance pour contrôler la quantité d'énergie que doit fournir le générateur pour atteindre une température désirée déterminée. Ces moyens comprennent :
- un dispositif de gestion de l'heure,
- un capteur météorologique,
- des moyens de traitement et de mémorisation pour traiter les informations fournies par des capteurs ainsi que les avis de confort fournis par l'utilisateur,
- une interface système-de-gestion/ utilisateur comportant :
   - plusieurs capteurs de mouvement fournissant des informations relatives à la présence d'individus dans l'habitat et à la température ambiante,
   - des moyens d'affichage pour fournir à l'utilisateur des informations sur le prix de l'énergie et la prise en compte des modifications de températures demandées,
   - des moyens d'appréciation permettant à l'utilisateur d'indiquer sa perception du confort obtenu, et d'indiquer sa préférence,
- un moyen d'action sur le générateur de conditionnement d'ambiance.

Ce gestionnaire présente notamment l'inconvénient suivant :
- Une adaptation difficile à des occupants dont la répétitivité des habitudes n'obéit pas à un rythme simple (hebdomadaire par exemple) n'est pas réalisable en l'état actuel de la technique.

Depuis quelques années, on cherche à définir en domotique des systèmes intelligents capables d'éviter tout travail de programmation et d'anticiper les besoins des occupants.

Le problème à résoudre, dans ce premier mode de réalisation, est donc celui de la réalisation concrète des opérations d'apprentissage des habitudes, de détermination de la probabilité de reproduction de ces habitudes et d'anticipation opérationnelle liée à l'application traitée, qui s'appuie sur l'observation temporelle de l'occupation des zones spatiales du bâtiment, ainsi que sur l'identification de l'emploi du temps des occupants.

### B- Second mode de réalisation : Surveillance d'individus

La détection de situations spécifiques ou anormales encourues par des individus peut notamment concerner la surveillance de personnes âgées vivant seules ou non. Celles-ci peuvent, en effet, être victimes de risques bien identifiés :
- des risques d'agression, qui sont fortement ressentis par ces personnes âgées vivant seules. Ces risques conditionnent souvent le comportement quotidien de ces personnes et motivent le souhait, pour certaines, d'être placées en télésurveillance.
- des risques de chute, qui sont réels.Il est essentiel, en cas de chute ou d'immobilité prolongée, d'intervenir rapidement. Il y a, en effet, une corrélation forte entre la fréquence des décès et le retard dans l'intervention.
- des risques de malaises ou d'évolutions du comportement, qui concernent les personnes en convalescence, les personnes sujettes à des malaises répétés (diabétiques, cardiaques, ...), ou encore les personnes démentes, qui peuvent provoquer des accidents (ouverture du gaz, ...) ou chercher à fuguer ... Ces personnes peuvent vivre à leur domicile ou en institution.

Face à tous ces risques, la technologie actuelle propose des systèmes d'aide à la surveillance. Ceux-ci peuvent être définis comme une mise en place, sur le site à surveiller, de moyens de perception et de calculs électroniques pour diagnostiquer au plus tôt l'apparition de ces risques et transmettre éventuellement une alarme. De telles alarmes peuvent alors permettre l'intervention de la famille, des voisins ou d'organismes spécialisés (pompiers, infirmières, gardien, ...).

Les systèmes les plus fréquemment rencontrés aujourd'hui, tel que celui décrit dans le document [3], comportent un dispositif, dont l'individu doit s'équiper, et nécessitent une action de ce même individu pour déclencher une alarme. On distingue alors les fonctions suivantes :
- Emission d'alarme : l'alarme est générée suite à une action volontaire de l'individu (pression sur un bouton, message vocal...). Le dispositif sollicité (médaillon autour du cou...) émet alors généralement des ondes radio qui vont déclencher une alarme téléphonique.
- Transmission/réception : la transmission de l'alarme se fait par liaison RTC (réseau téléphonique commuté) à destination d'un ou plusieurs correspondants qui interviennent soit en dialoguant par téléphone (la communication est automatiquement établie) soit en se déplaçant vers l'individu.
- Surveillance par un centre spécialisé : le système peut être professionnalisé, l'alarme étant alors acheminée à un centre spécialisé qui assure le suivi 24H/24 et prend les mesures nécessaires (réorientation de l'alarme vers les pompiers, le SAMU, une assistante sociale, ...) pour un coût d'abonnement généralement faible.

De tels systèmes, bien que performants, sont insuffisants car ils reposent sur
- une instrumentation de l'individu à surveiller (bracelet, montre, collier ...)
- l'aptitude de l'individu à déclencher une alarme par un geste volontaire : il apparaît à l'usage que le système n'est pas porté en permanence (et oublié le jour J) et qu'il n'est pas actionné raisonnablement : soit il est actionné pour d'autres raisons (l'individu a besoin de parler, veut s'assurer qu'il fonctionne, l'actionne par erreur...), soit il est oublié dans l'affolement de l'incident.

Le problème à résoudre, dans ce second mode de réalisation, est celui de déclencher automatiquement une alarme, en se basant sur une probabilité de présence/niveau d'activité/état d'une personne dans les locaux.

### C- Objet de l'invention

L'invention a pour objet de résoudre les problèmes techniques définis ci-dessus en proposant un système et un procédé de traitement anticipatif pour satisfaire aux besoins exprimés par un ou plusieurs individus, dans des locaux professionnels ou domestiques ou en milieu médicalisé, en déterminant à partir de l'observation des habitudes des personnes une façon d'obtenir une probabilité de comportement, qui repose sur le découpage du temps.

Le document référencé [4] décrit un système et un procédé de contrôle programmé d'une maison et un système d'automatisation d'un immeuble pour économiser de l'énergie et améliorer le confort. Un logiciel comprenant de premiers algorithmes adaptatifs contrôlés par des signaux de présence provenant de capteurs, permet de détecter de manière continue et de mémoriser le comportement systématique et aléatoire d'au moins une personne dans une ou plusieurs pièces. Ce logiciel comprend également de seconds algorithmes déterministes modifiables pour adapter et commander des capteurs d'installations ou groupes d'installations. Les algorithmes sont combinés avec des paramètres extérieurs dans un troisième algorithme pour optimiser le système d'automatisation dans son ensemble et pour ajuster les premier et second algorithmes au moyen d'une boucle de retour. Mais ce document ne divulgue pas :
- la détection de situations spécifiques ou anormales de personnes,
- l'utilisation de tranches horaires et/ou de journées type,
- le portage sur une architecture de services assurant un traitement délocalisé des données sur le site d'un offreur de télé-services avec téléchargement des résultats du traitement sur une passerelle domotique dans la maison du client,
- l'établissement, de manière auto adaptative, d'un tableau d'indicateurs de probabilité de présence d'au moins un individu par zone spatiale et par tranche horaire, et l'utilisation de ce tableau.

### EXPOSÉ DE L'INVENTION

L'invention concerne un système anticipatif de réglage des états de systèmes/équipements et/ou de détection de situations spécifiques ou anormales d'équipements et/ou de personnes, pour satisfaire les besoins exprimés par au moins un individu susceptible d'occuper, pendant au moins une période d'occupation renouvelable périodiquement, au moins une zone spatiale dans des locaux professionnels ou domestiques ou médicalisés, comprenant :
- des moyens de détection directe, en particulier de détection de présence/activité/état de personnes, ou indirecte de l'occupation de cette zone spatiale par cet au moins un individu,
- des moyens d'acquisition de valeurs de réglage des états des systèmes, ou des équipements ou des informations sur l'activité ou l'état des personnes,
- des moyens de traitement préliminaire des informations physiques obtenues, de mémorisation d'une présence/activité/état de cet au moins un individu, caractérisé en ce qu'il comprend, en outre :

- des moyens de traitement à caractère statistique de la valeur de probabilité de présence/activité/état sur un horizon temporel défini et glissant, d'établissement, de manière auto-adaptive, d'un tableau d'indicateurs de probabilité de présence/activité/état d'au moins un individu par zone spatiale et par tranche horaire,
- des moyens d'affectation de seuils à ces indicateurs de probabilité de présence/activité/état pour déterminer la valeur de chaque estimateur de présence/activité/état correspondant à chaque tranche horaire pour chaque zone spatiale,
- des moyens d'observation en temps réel de l'estimateur de présence/activité/état correspondant à la tranche horaire courante et aux tranches horaires suivantes, de manière à décider d'éventuelles actions à entreprendre, pour mettre dans un état déterminé les systèmes, ou équipements,
- des moyens de comparaison en temps réel de la valeur de l'estimateur de présence/activité/état et de l'indication de présence/activité/état effective en vue de décider d'éventuelles actions,
- des moyens d'observation, de stockage, et de traitement des paramètres et valeurs de réglage des états des systèmes, ou des équipements,
- des moyens de décision d'éventuelles actions à entreprendre : réglage des paramètres ou lancement d'une alarme.

L'invention concerne également un procédé anticipatif de réglage des états de systèmes/équipements et/ou de détection de situations anormales d'équipements et/ou de personnes, pour satisfaire les besoins exprimés par au moins un individu susceptible d'occuper, pendant au moins une période d'occupation renouvelable périodiquement, au moins une zone spatiale dans des locaux professionnels ou domestiques ou médicalisés, comprenant :
- une étape de détection directe de présence/activité/état de la personne ou indirecte de l'occupation de cette zone spatiale par cet au moins un individu,
- une étape d'acquisition de valeurs de réglage des états des systèmes/équipements,
- une étape de traitement préliminaire des informations physiques obtenues, de mémorisation d'une présence éventuelle de cet au moins un individu,
caractérisé en ce qu'il comprend, en outre :
- une étape de traitement à caractère statistique de la valeur de probabilité de présence/activité/état sur un horizon temporel défini et glissant, et d'établissement, de manière auto-adaptive, d'un tableau d'indicateurs de probabilité de présence/activité/état d'au moins un individu par zone spatiale et par tranche horaire,
- une étape d'affectation de seuils à ces indicateurs de probabilité de présence/activité/état pour déterminer la valeur de chaque estimateur de présence/activité/état, cette valeur constituant la variable sur la base de laquelle sont prises les décisions de commande des états des systèmes, ou des équipements, correspondant à chaque tranche horaire pour chaque zone spatiale,
- une étape composée de deux phases :
   - une phase d'observation en temps réel de l'estimateur de présence/activité/état correspondant à la tranche horaire courante et des estimateurs de présence/activité/état correspondants aux tranches horaires suivantes pour au moins une zone spatiale donnée, et
   - une phase de comparaison en temps réel de la valeur de l'estimateur de présence/activité/état et de l'indicateur de présence/activité/état effective,
- une étape d'observation, de stockage, et de traitement des paramètres et valeurs de réglage des états des systèmes/équipements,
   de manière à décider d'éventuelles actions à entreprendre,
- une étape de décision d'éventuelles actions à entreprendre : réglages de paramètres ou lancement d'une alarme.

Dans le système de l'invention, on peut utiliser une classification hebdomadaire (sept classes de jours : lundi, mardi, ...) ou un nombre réduit de classes de jours (deux classes par exemple : semaine, week-end). La classification en sept classes peut être retenue par défaut, le nombre de classes pouvant être réduit après traitement statistique des données d'observation de la présence et/ou de l'état des personnes dans les locaux et/ou du réglage d'états des systèmes (ou des équipements).

On peut également utiliser une classification en journées types, variables selon les rythmes de vie/activité/état des occupants, caractérisées par les heures d'occurrence d'un événement jugé déterminant (lever par exemple) définies par exemple par un enchaînement de présences (heures d'occurrence, durées) dans des zones spatiales données et/ou du réglage d'états des systèmes (ou des équipements). Cette classification se fait par traitement statistique des données d'observation de présence/activité/état des personnes dans les locaux.

Le système de l'invention peut en outre, présenter les caractéristiques complémentaires suivantes :
- sa capacité à déterminer, parmi les classes de jours types, le type de jours en cours peut permettre de choisir le programme d'habitudes le plus judicieux possible. La capacité peut aussi être laissée au client d'informer le système sur le type de jour à venir.
- Il peut utiliser une association matérielle de capteurs, un capteur étant disposé dans chaque zone spatiale, connectés à un calculateur. Ce calculateur, en phase d'apprentissage permanent, collecte toutes les données de présence/activité/état des personnes en temps réel sur plusieurs journées, établit ensuite, par tranches horaires, les statistiques de présence/activité/état (valeur moyenne et écart type), et fournit en sortie une probabilité anticipée de présence/activité/état (estimateur) sous la forme de variables numériques actualisées automatiquement en temps réel par glissement temporel dans une fenêtre d'acquisition.
- Le découpage en zones spatiales et en tranches horaires peut être le résultat d'une classification automatisée des présences et des absences collectées en phase d'apprentissage, sur la base d'un critère de présence-absence.
- Les critères de classification peuvent tenir compte d'exigences complémentaires : critères de présence et d'agitation ou d'état des personnes, critères de présence et de confort, critères de présence et d'économie d'énergie ou de coût, critères de présence et de sécurité contre toute intrusion.
- Une sortie du calculateur peut prédisposer l'état des locaux, c'est-à-dire déterminer des réglages et activer des systèmes on équipements pilotés, en particulier d'automatismes (température, lumière, son, ...) pour assurer le confort personnalisé de l'occupant, objet d'un apprentissage de la part du procédé (ou du système), en période d'occupation.
- Une sortie du calculateur peut remettre les locaux dans un état défini en inoccupation après le départ de l'occupant en vue de minimiser ses coûts d'exploitation.
- Une sortie du calculateur peut diagnostiquer une situation spécifique et/ou déclencher une alarme, lorsque des valeurs mesurées en temps réel s'éloignent de valeurs prévues par les statistiques.
- Le système peut utiliser des informations que des utilisateurs souhaitent particulièrement voir prendre en considération pendant la phase d'apprentissage ou exceptionnellement en cours d'exploitation.
- Le système peut utiliser une architecture matérielle et logicielle, support de services s'appuyant par exemple sur le réseau Internet, qui assure un traitement délocalisé des données de présence/activité et/ou de l'état des personnes et/ou du réglage d'états des systèmes (ou des équipements), sur le site d'un offreur de services et télécharge sur une passerelle domotique située en local, dans les locaux, le programme le mieux adapté au rythme de vie/activité/état des occupants ou générer une alarme.

Le système est alors réparti entre les locaux du client et celui d'un offreur de services distant. Le système est alors un télé-service. Le système de l'invention peut aussi être résidant chez l'occupant.

L'invention peut être utilisée pour déterminer les modes de répétitivité des habitudes d'un individu, sur un cycle hebdomadaire ou non. Les applications envisagées sont les suivantes :
- automatisation personnalisée, sans intervention, de tous les équipements concourant à la création d'ambiances dans des locaux : thermique, lumineuse, sonore, olfactive, ... en fonction de l'occupation de ceux-ci,
- programmation automatique d'équipements dont les états font l'objet d'habitudes répétitives dans le temps,
- contrôle d'états et détection d'anomalies dans un processus : surveillance d'individus à mobilité réduite et détection de situations anormales, chutes par exemple ...

### BRÈVE DESCRIPTION DES DESSINS

La figure 1 illustre les étapes du procédé de l'invention.

La figure 2 illustre les deux modes de réalisation du système de l'invention.

La figure 3 illustre un exemple de réalisation du système de l'invention.

### EXPOSÉ DÉTAILLÉ DE MODES DE RÉALISATION PARTICULIERS

L'invention concerne un système anticipatif de réglage des états de systèmes/équipements et/ou de détection de situations spécifiques ou anormales d'équipements et/ou de personnes, pour satisfaire les besoins exprimés par au moins un individu susceptible d'occuper pendant au moins une période d'occupation renouvelable périodiquement au moins une zone spatiale dans des locaux professionnels ou domestiques ou médicalisés, qui comprend :
- des moyens de détection directe, en particulier de présence/activité/état des personnes, ou indirecte de l'occupation de cette zone spatiale par cet au moins un individu pendant une période d'occupation découpée en tranches horaires Tj,
- des moyens d'acquisition des valeurs de réglage des états des systèmes/équipements,
- des moyens de traitement préliminaire des informations physiques obtenues, de mémorisation d'une présence/activité/état des personnes éventuelle de cet au moins un individu dans une tranche horaire donnée Tj pour une zone spatiale déterminée Zi,
- des moyens de traitement à caractère statistique de la valeur de probabilité de présence/activité/état des personnes sur un horizon temporel défini et glissant, de manière à établir, de manière auto-adaptive, un tableau d'indicateurs (Pij) de probabilité de présence/activité/état des personnes par zone spatiale et par tranche horaire, tel que celui représenté en fin de description,
- des moyens d'affectation de seuils à ces indicateurs de probabilité de présence/activité/état des personnes pour déterminer la valeur de chaque estimateur de présence/activité/état des personnes correspondant à chaque tranche horaire pour chaque zone spatiale,
- des moyens d'observation en temps réel de l'estimateur de présence/activité/état des personnes correspondant à la tranche horaire courante et sur les tranches horaires suivantes de manière à décider d'éventuelles actions à entreprendre pour mettre dans un état déterminé les systèmes/équipements,
- des moyens de comparaison en temps réel de la valeur de l'estimateur de présence/activité/état des personnes et de l'indication de présence/activité/état des personnes effective en vue de décider d'éventuelles actions,
- des moyens d'observation, de stockage et de traitement des valeurs de réglage des états des systèmes/équipements,
- des moyens de décisions d'éventuelles actions à entreprendre : réglages de paramètres ou lancement d'une alarme.

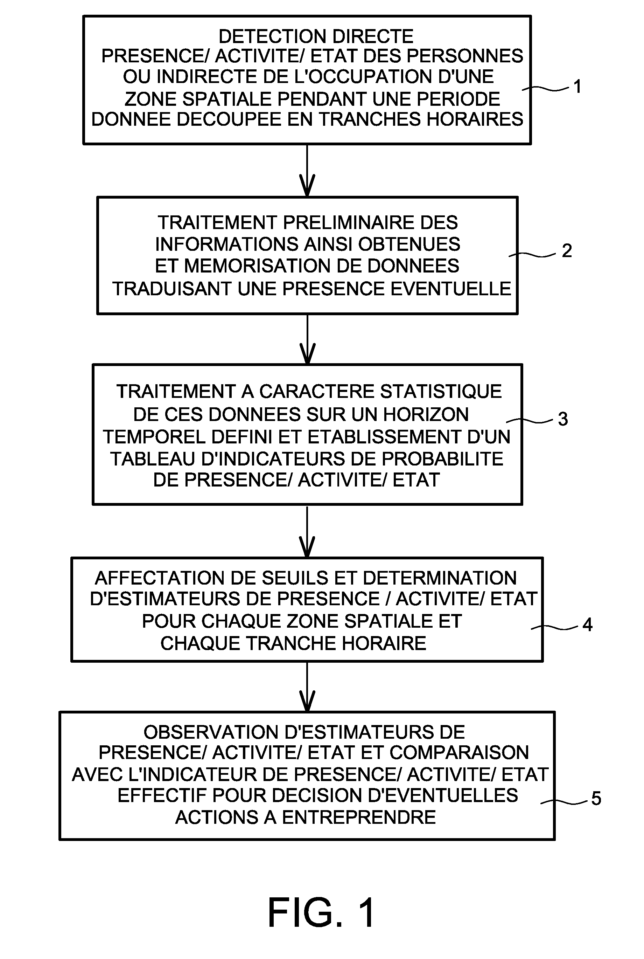

L'invention concerne également un procédé permettant de réaliser un tel contrôle. Comme illustré sur la figure 1, ce procédé comprend les étapes suivantes :
- une étape 1 de détection directe ou indirecte de l'occupation de cette zone spatiale par cet au moins un individu pendant une période d'occupation découpée en tranches horaires Tj et d'acquisition de valeurs de réglage des états des systèmes/équipements,
- une étape 2 de traitement préliminaire des informations physiques obtenues, de mémorisation de données traduisant une présence/activité/état éventuelle de cet au moins un individu dans une tranche horaire donnée Tj pour une zone spatiale déterminée Zi,
- une étape 3 de traitement à caractère statistique de la valeur de probabilité de présence/activité/état sur un horizon temporel défini et glissant, de manière à établir, de manière auto-adaptive, un tableau d'indicateurs Pij de probabilité de présence/activité/état par zone spatiale et par tranche horaire,
- une étape 4 d'affectation de seuils à ces indicateurs de probabilité de présence/activité/état pour déterminer la valeur de chaque estimateur de présence/activité/état, cette valeur constituant la variable sur la base de laquelle sont prises les décisions de commande des systèmes ou des équipements, correspondant à chaque tranche horaire pour chaque zone spatiale,
- une étape 5 composée de deux phases :
   - une phase d'observation en temps réel de l'estimateur de présence/activité/état correspondant à la tranche horaire courante et des estimateurs de présence/activité/état correspondants aux tranches horaires suivantes pour au moins une zone spatiale donnée, et
   - une phase de comparaison en temps réel de la valeur de l'estimateur de présence/activité/état et de l'indicateur de présence/activité/état effective,
- une étape d'observation, de stockage, et de traitement de paramètres et valeurs de réglage des états des systèmes/équipements,
- une étape de décision d'éventuelles actions à entreprendre : réglages de paramètres ou lancement d'une alarme.

L'invention consiste ainsi à diviser les locaux en zones spatiales Zi, à découper pour chaque zone le temps en tranches horaires Tj, et à observer et noter la présence/activité/état éventuelle d'individus dans chaque zone spatiale dans ces différentes tranches horaires. Toute information de présence/activité/état acquise pour une zone ou une personne est appliquée à la tranche horaire, ainsi dès qu'une présence est observée, la zone spatiale correspondante Zi est déclarée occupée pendant la tranche horaire Tj concernée. Un traitement statistique des données fournies par des détecteurs de présence ou de paramètres liées à la présence permet, par exemple en moyennant pour chaque zone spatiale les indications de présence/activité/état d'une même tranche horaire selon une classification par exemple journalière sur un horizon temporel défini par exemple cinq semaines, d'obtenir une probabilité de présence/activité/état. On peut alors associer un seuil à cette valeur et obtenir une valeur d'estimateur de présence/activité/état, qui, affectée d'un seuil, peut servir d'indicateur prédictif de présence/ activité/état:0, 1, indéterminé/normale.../détendu... .

On peut ainsi établir le tableau d'indicateurs de probabilité de présence/activité/état Pij par zones spatiales Zi/personnes Pi et par tranches horaires Tj, représenté en fin de description.

Pour que le système de l'invention puisse fonctionner, il faut que les habitudes de présence/activité/état soient répétitives, ce qui est d'autant plus vrai que la grille des tranches horaires est construite sur un découpage optimisé.

L'observation de l'estimateur de présence/activité/état sur les x prochaines tranches horaires permet alors de faire les opérations nécessaires à l'application (valeur de réglage des états des systèmes), anticipation du chauffage génération d'alarme par exemple.

Ne connaissant pas l'optimum a priori on peut choisir de réaliser un découpage assez serré du temps : un découpage au quart d'heure peut ainsi donner satisfaction pour la présence en particuler.

On peut aussi superposer à ce premier niveau de découpage un second niveau de découpage du temps plus macroscopique. Ce second niveau de découpage est alors caractérisé par l'application traitée, et notamment par les valeurs de réglage identiques pour les états des systèmes pilotés. Ainsi, le rythme familial, lever, petit déjeuner, déjeuner, dîner, coucher, ... peut servir à ajuster une consigne de température en fonction de ce rythme.

On réalise ainsi une classification journalière sur la base de laquelle sont établies les statistiques (moyennes dans un premier temps) fournissant la valeur des estimateurs de présence. Dans un premier temps, il est naturel de se baser sur une périodicité hebdomadaire des habitudes avec sept classes de jours différents (lundi, mardi, ...). Cette classification peut être choisie par défaut.

Après une période d'observation d'une durée suffisante, on peut réaliser une classification des jours différente, notamment pour des individus dont les rythmes de vie sont différents sur des périodes contiguës (cas des travailleurs postés en particulier). Dans ce cas un indicateur de probabilité de présence, calculé sur la base d'habitudes hebdomadaires, a du mal à se stabiliser. La probabilité d'erreur peut donc être importante. On peut alors tenter d'établir des classes de jours basées sur un événement jugé important, l'horaire du lever par exemple. L'événement "lever" est défini comme un enchaînement de présences (heures d'occurrence, durées) dans des lieux donnés permettant de reconstituer un trajet. Le procédé proposé est alors composé d'une suite ordonnée de jours types. Pour réduire les risques d'erreur on peut éventuellement avoir une entrée complémentaire sur le système autorisant un occupant à indiquer le type du jour, voire des jours, suivant le jour en cours.

Cette anticipation des actions est mise en oeuvre par des algorithmes spécifiques liés à l'application en vue de fournir le meilleur service. Dans le cas du chauffage, ces algorithmes font intervenir de multiples paramètres : inertie thermique du bâtiment, confort souhaité, coût de l'énergie, climat, ... Les actions sont gérées sur la base de ces algorithmes. Dans le cas du chauffage électrique, c'est le plus souvent l'envoi de consignes de température ou de niveaux de consigne aux régulateurs des équipements de chauffage.

### Premier mode de réalisation

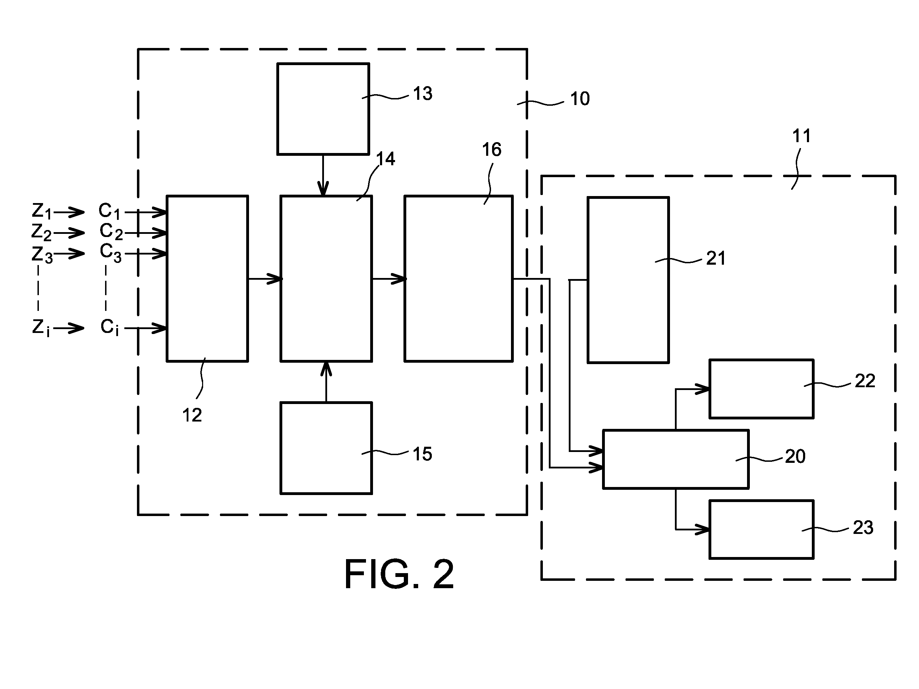

Dans ce premier mode de réalisation pour des applications de gestion des ambiances de locaux, comme illustré sur la figure 2, chaque zone Zi est équipée d'au moins un capteur Ci qui renvoit notamment des données de présence sur des premiers moyens de traitement 10. Ces premiers moyens de traitement 10 comprennent aussi :
- des moyens 12 de collecte et de stockage de données, issues de capteurs C1, C2, C3, ..., Cn situés respectivement dans des zones Z1, Z2, Z3, ..., Zn des locaux, de paramètres physiques, et de valeurs des états des systèmes,
- des moyens d'observation et de tri de ces données 13,
- des moyens de calcul des probabilités 14, en tenant compte de tranches horaires 15,
- et des moyens de remplissage d'un tableau d'indicateurs de probabilité de présence 16.

Les logiciels résidant dans ces premiers moyens de traitement intègrent les algorithmes et font appel à des critères simples de traitement de données. Ainsi, on peut dire qu'une personne est présente dans une zone spatiale pendant une tranche horaire lorsque l'estimateur de présence correspondant est sollicité à plus de x % du temps.

Ce premier mode de réalisation peut s'appliquer aux applications classiques : chauffage, ventilation, éclairage, niveau sonore de la chaîne stéréo, ...

### Second mode de réalisation

Dans ce second mode de réalisation, pour des applications de surveillance des personnes malades par exemple, les données de présence sont complétées de données d'activité et/ou d'état de la personne. Le découpage horaire peut être aussi précis que l'on souhaite en vue d'établir des probabilités dans un laps de temps plus fin (quelques minutes). On peut alors constituer un tableau de probabilité de présence/activité/état très précis anticipant les mouvements les plus probables des occupants et détecter, par exemple, les situations inhabituelles : chutes, immobilité prolongée, ...

Des seconds moyens de traitement 11 permettent alors, comme illustré sur la figure 2, une comparaison temps réel 20 entre des valeurs projetées 16 et des valeurs réelles 21 :
(i) soit pour effectuer un ajustement en temps réel et améliorer le pronostic 22,
(ii) soit pour déterminer une alarme 23.

Cette comparaison est obligatoire car il fixe l'évolution du système et ses performances opérationnelles.

Ces deux modes de réalisation peuvent être enrichis par la prise en compte, l'acquisition et le traitement d'autres variables que la présence. Selon l'application traitée, les valeurs de réglage des états des systèmes, la prise en compte de la température, de la luminosité, du niveau sonore permet d'anticiper le niveau des besoins des occupants : à l'arrivée de ceux-ci, le niveau de température peut être de 20°C par exemple, ce niveau étant considéré comme le niveau de confort dans la plage horaire concernée.

Le point (ii) ci-dessus est riche de possibilités. Il permet de gérer des questions de sécurité : pannes de chauffage, intrusion, sécurité des biens. Le second mode de réalisation autorise aussi une telle évaluation de situation anormale grâce à une comparaison entre des valeurs projetées et des valeurs réelles.

Ces deux modes de réalisation permettent d'envisager une élaboration de modèles anticipatifs plus complexes par association de variables. Par exemple :
- l'évolution de la température peut être analysée par plages temporelles pour permettre d'accéder à des paramètres physiques, la constante de temps du bâtiment par exemple.
- la confrontation des modèles de présence et du modèle d'évolution dynamique des températures à l'intérieur du bâtiment peut être utilisée pour choisir la date anticipée de lancement du chauffage.

Une telle approche peut être généralisée, à d'autres caractéristiques de l'habitat ou de son environnement : climatisation, température extérieure ...

Le stockage des données renvoyées par le système peut nécessiter un encombrement peu compatible avec un équipement situé en local. Il est possible alors de délocaliser le stockage et le traitement des données sur une machine extérieure et en profiter pour bénéficier de l'ergonomie du réseau Internet. La détermination du programme devient alors un service mettant en jeu une communication avec le site Internet d'un offreur de service.

### Autre exemple de réalisation

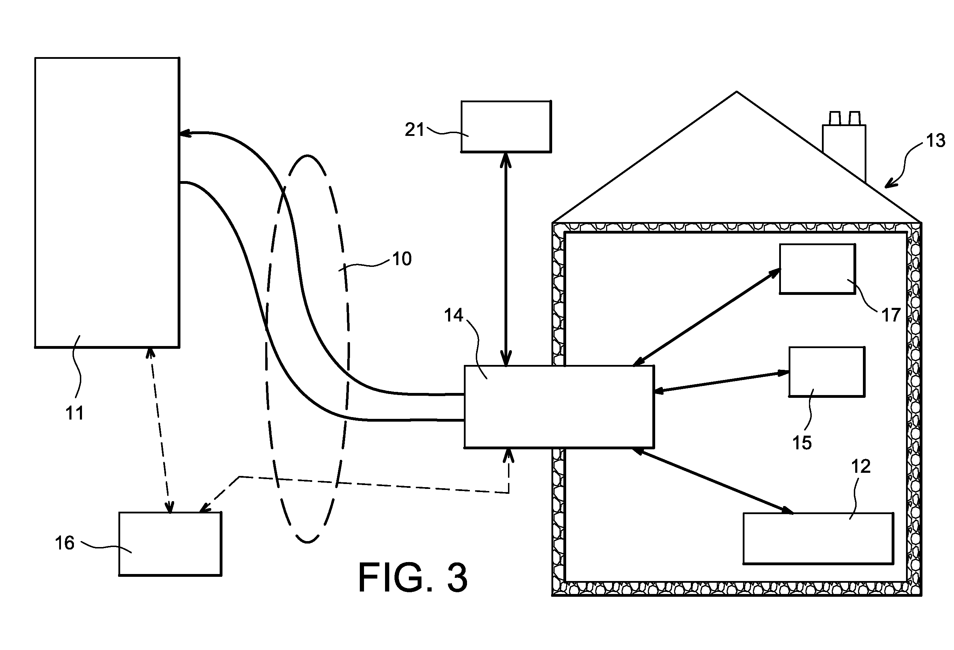

La figure 3 illustre un schéma d'organisation d'un service de téléprogrammation automatique d'équipements communicants, électriques ou non, et notamment de chauffage, selon l'invention : ces équipements étant situés dans un bâtiment constitué ici d'une seule pièce ou zone.

Sur cette figure, un réseau informatique 10, par exemple le réseau Internet, relie un centre de télé-services 11, hébergeant un site d'un offreur de service de télécommande d'équipements 12, à un bâtiment 13 via une passerelle 14, par exemple domotique.

Un client audit service, grâce à un terminal 15 situé dans ledit bâtiment, un ordinateur personnel ("PC") par exemple, ou un terminal 16 situé à distance, peut se connecter à la passerelle 14 ou au centre de télé-services 11. Un détecteur 17 permet de connaître la présence d'une personne dans la pièce représentée du bâtiment 13.

Plusieurs sondes de température, internes au bâtiment ou externe 21, peuvent être utilisées. Ces sondes sont reliées à la passerelle 14.

La passerelle 14 assure les communications entre l'intérieur et l'extérieur du bâtiment 13.

Cette passerelle 14 peut communiquer avec le centre de télé-services 11 par l'intermédiaire des réseaux de télécommunications classiques, pouvant transiter par le réseau Internet. Cette passerelle prend la place d'un ordinateur central en :
- assurant les communications entre le centre de télé-services 11 et le bâtiment 13,
- recevant, stockant et transmettant au centre de télé-services 11 les informations fournies par les détecteurs de présence 17, d'éventuelles sondes de température 21 et des capteurs divers,
- stockant le programme journalier en cours reçu du centre de téléservices, et activant les équipements 12.

Les terminaux, local 15 et distant 16, sont facultatifs. Leur objet est d'assurer la connexion de l'utilisateur sur le centre de télé-services, ou sur la passerelle si celle-ci dispose d'un serveur Web elle aussi, afin de récupérer des informations ou, éventuellement, en fournir au système.

Les modules logiciels présents dans le centre de télé-services 11 peuvent être :
- un serveur Web,
- le logiciel d'administration du parc de passerelles,
- le programme d'occupation prévisionnelle de chaque client,
- les logiciels intégrant l'algorithme de traitement permettant de définir la périodicité des habitudes des clients,
- les logiciels intégrant les algorithmes de calcul des estimateurs de présence par zone et par tranche horaire,
- éventuellement les logiciels intégrant les algorithmes permettant de valider le type de jour en cours par l'observation d'un événement de référence, lever par exemple,
- éventuellement des sauvegardes des programmes, de chauffage par exemple.

Les modules logiciels présents dans la passerelle 14 peuvent être :
- le programme d'occupation actualisé chauffage,
- le programme d'activation des équipements, prenant en compte les paramètres liés à l'application,
- les logiciels d'acquisition des informations de présence, et éventuellement, de températures,
- les logiciels de commande des équipements.

Un tel exemple de réalisation permet d'effectuer des stockages de données plus importants, donc des traitements plus sophistiqués qu'avec un système entièrement local (car moins onéreux), et donc d'affiner la périodicité des habitudes des utilisateurs et de mieux personnaliser leur programme. Il est bien adapté à la détermination de la classification des jours types. Il peut aussi être utilisé dans l'analyse fine du comportement des occupants au moyen d'outils statistiques liant entre eux les différents capteurs. Il est applicable dans la surveillance de personnes dépendantes notamment pour prédire leurs déambulations et lancer des alertes en cas de besoin.

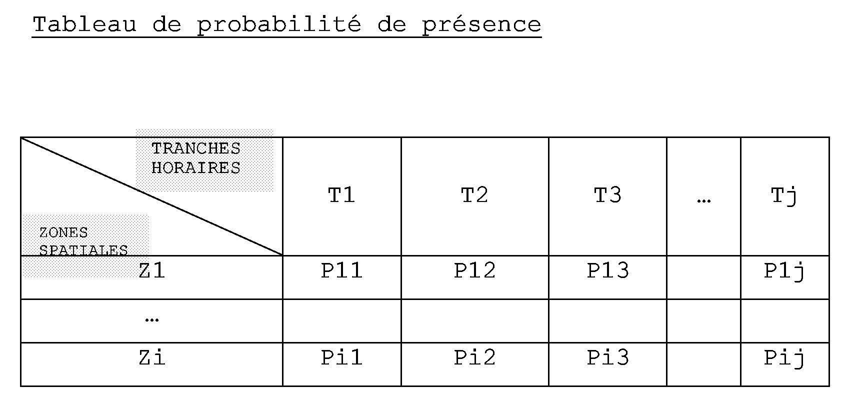

### REFERENCES

**[1]** Article intitulé "Gestion d'énergie" ("les Cahiers Techniques du Bâtiment", décembre 1990).
**[2]** FR 0 883 050
**[3]** FR 2 760 116
**[4]** US 6 263 260

## Revendications

1. Système anticipatif de réglage des états de systèmes/équipements et/ou de détection de situations spécifiques ou anormales d'équipements et/ou de personnes, pour satisfaire les besoins exprimés par au moins un individu susceptible d'occuper, pendant au moins une période d'occupation renouvelable périodiquement, au moins une zone spatiale dans des locaux professionnels ou domestiques ou médicalisés comprenant:
- des moyens de détection directe, en particulier de détection de présence/activité/état de la personne, ou indirecte de l'occupation de cette zone spatiale par cet au moins un individu,
- des moyens d'acquisition de valeurs de réglage des états des systèmes/équipements,
- des moyens de traitement préliminaire des informations physiques obtenues, de mémorisation d'une présence/activité/état de cet au moins un individu,
**caractérisé en ce qu'**il comprend en outre :
- des moyens de traitement à caractère statistique de la valeur de probabilité de présence/activité/état de la personne sur un horizon temporel défini et glissant, et d'établissement, de manière auto-adaptive, d'un tableau d'indicateurs (Pij) de probabilité de présence/activité/état de la personne d'au moins un individu par zone spatiale (Zi) et par tranche horaire (Tj),
- des moyens d'affectation de seuils à ces indicateurs de probabilité de présence/activité/état de la personne pour déterminer la valeur de chaque estimateur de présence/activité/état de la personne correspondant à chaque tranche horaire pour chaque zone spatiale,
- des moyens d'observation en temps réel de l'estimateur de présence/activité/état de la personne correspondant à la tranche horaire courante et aux tranches horaires suivantes, de manière à décider d'éventuelles actions à entreprendre pour mettre dans un état déterminé les systèmes/équipements ou gérer une alarme,
- des moyens de comparaison en temps réel de la valeur de l'estimateur de présence/activité/état de la personne et de l'indication de présence/activité/état de la personne effective en vue de décider d'éventuelles actions,
- des moyens d'observation, de stockage, et de traitement des paramètres et valeurs de réglage des états des systèmes/équipements,
- des moyens de décision d'éventuelles actions à entreprendre : réglages de paramètres ou lancement d'une alarme.

2. Système selon la revendication 1, dans lequel les moyens de traitement à caractère statistique utilisent une classification hebdomadaire par défaut ou un nombre réduit de classes.

3. Système selon la revendication 1, dans lequel les moyens de traitement à caractère statistique utilisent une classification en journées types, variables selon les rythmes de vie des occupants, **caractérisées par** les heures d'occurrence d'un événement jugé déterminant.

4. Système selon la revendication 3, dans lequel les moyens de traitement à caractère statistique choisissent, parmi les classes de jours types, le type du jour en cours pour appliquer son programme d'habitudes.

5. Système selon l'une quelconque des revendications précédentes comprenant un calculateur qui, dans la phase d'apprentissage permanent, collecte des données de présence/activité/état des personnes en temps réel sur plusieurs journées, établit ensuite par tranches horaires les statistiques de présence/activité/état des personnes et fournit en sortie une probabilité anticipée de présence/activité/état des personnes.

6. Système selon l'une quelconque des revendications 1 à 5 comprenant des moyens de classification automatisée des présences/ activités/états des personnes et des absences collectées en phase d'apprentissage, sur la base d'un critère de présence-absence/activité faible-réduite-forte.../état calme-stressé-fiévreux... .

7. Système selon l'une quelconque des revendications 1 à 6 comprenant des moyens de prise en compte d'exigences complémentaires : critères de présence et de confort, critères de présence et d'économie d'énergie ou de coût, critères de présence et de sécurité contre l'intrusion.

8. Système selon la revendication 1 comprenant des moyens de détermination des réglages et activation des systèmes ou équipements pilotés, en particulier pour anticiper les réglages d'automatismes pour assurer le confort personnalisé de l'occupant en période d'occupation.

9. Système selon la revendication 1, comprenant des moyens pour remettre les locaux dans un état défini en inoccupation après le départ de l'occupant en vue de minimiser ses coûts d'exploitation.

10. Système selon la revendication 1 comprenant des moyens pour diagnostiquer une situation spécifique et/ou actionner une alarme lorsque les valeurs mesurées en temps réel s'éloignent de valeurs prévues statistiquement.

11. Système selon la revendication 1 comprenant des moyens de saisie d'informations que les utilisateurs souhaitent particulièrement voir prendre en considération dans la phase d'apprentissage ou en cours d'exploitation.

12. Système selon la revendication 1 comprenant une architecture assurant un traitement délocalisé, sur le site d'un offreur de services, de données de présence/activité/état de la personne et téléchargeant sur une passerelle domotique située en local le programme le mieux adapté au rythme de vie des occupants.

13. Procédé anticipatif de réglage des états de systèmes/équipements et/ou de détection de situations spécifiques ou anormales d'équipements et/ou de personnes, pour satisfaire les besoins exprimés par au moins un individu susceptible d'occuper, pendant au moins une période d'occupation renouvelable périodiquement, au moins une zone spatiale dans des locaux professionnels ou domestiques ou médicalisés, qui comprend :
- une étape (1) de détection directe de présence/activité/état de la personne ou indirecte de l'occupation de cette zone spatiale par cet au moins un individu,
- une étape d'acquisition de valeurs de réglage des états des systèmes/équipements
- une étape (2) de traitement préliminaire des informations physiques obtenues, de mémorisation de données traduisant une présence éventuelle de cet au moins un individu,
**caractérisé en ce qu'**il comprend, en outre :
- une étape (3) de traitement à caractère statistique de la valeur de probabilité de présence/activité/état de la personne sur un horizon temporel défini et glissant, et d'établissement, de manière auto-adaptive, d'un tableau d'indicateurs (Pij) de probabilité de présence/activité/état de la personne d'au moins un individu par zone spatiale (Zi) et par tranche horaire (Tj),
- une étape (4) d'affectation de seuils à ces indicateurs de probabilité de présence/activité/état de la personne pour déterminer la valeur de chaque estimateur de présence/activité/état de la personne, cette valeur constituant la variable sur laquelle sont prises les décisions de commande des états des systèmes ou des équipements ou de génération d'une alarme, correspondant à chaque tranche horaire pour chaque zone spatiale,
- une étape (5) composée de deux phases :
• une phase d'observation en temps réel de l'estimateur de présence/activité/état de la personne correspondant à la tranche horaire courante et des estimateurs de présence/activité/état de la personne correspondants aux tranches horaires suivantes pour au moins une zone spatiale donnée, et
• une phase de comparaison en temps réel de la valeur de l'estimateur de présence/activité/état de la personne et de l'indicateur de présence/activité/état de la personne effectif,
- une étape d'observation, de stockage, et de traitement des paramètres et valeurs de réglage des états des systèmes/équipements,
- une étape de décision d'éventuelles actions à entreprendre : réglages de paramètres ou lancement d'une alarme.

14. Procédé selon la revendication 13 dans lequel, pendant l'étape (3) de traitement statistique, on utilise une classification hebdomadaire par défaut ou un nombre réduit de classes.

15. Procédé selon la revendication 13 dans lequel, pendant l'étape (3) de traitement statistique, on utilise une classification de journées types, variables selon les rythmes de vie des occupants, **caractérisées par** les heures d'occurrence d'un événement jugé déterminant.

16. Procédé selon la revendication 15 dans lequel, pendant l'étape (3) de traitement statistique, on choisit, parmi les classes de jours types, le type du jour en cours pour appliquer son programme d'habitudes.

17. Procédé selon l'une quelconque des revendications 13 à 16, comprenant une étape d'apprentissage permanent pendant laquelle un calculateur collecte des données de présence/activité/état de la personne en temps réel sur plusieurs journées, établit ensuite par tranches horaires des statistiques de présence/activité/état de la personne et fournit en sortie une probabilité anticipée de présence/activité/état de la personne sous la forme de variables numériques actualisées automatiquement en temps réel par glissement temporel dans une fenêtre d'acquisition.

18. Procédé selon l'une quelconque des revendications 13 à 17, comprenant une étape de classification automatisée des présences/activités/états de la personne et des absences collectées en phase d'apprentissage, sur la base d'un critère de présence-absence/activité faible-reduite-forte/état calme-stressé-fiévreux... .

19. Procédé selon l'une quelconque des revendications 13 à 18, comprenant une étape de prise en compte d'exigences complémentaires : critères de présence et de confort, critères de présence et d'économie d'énergie ou de coût, critères de présence et de sécurité contre l'intrusion.

20. Procédé selon la revendication 13 comprenant une étape de détermination des réglages et d'activation des systèmes ou équipements pilotés, en particulier d'automatismes pour assurer le confort personnalisé de l'occupant en période d'occupation.

21. Procédé selon la revendication 13 comprenant une étape pour remettre les locaux dans un état défini en inoccupation après le départ de l'occupant en vue de minimiser les coûts d'exploitation.

22. Procédé selon la revendication 13 comprenant une étape de diagnostic d'une situation spécifique et/ou d'actionnement d'une alarme lorsque les valeurs mesurées en temps réel s'éloignent de valeurs prévues statistiquement.

23. Procédé selon la revendication 13 comprenant une étape de saisie d'informations que des utilisateurs souhaitent particulièrement voir prendre en considération dans la phase d'apprentissage ou en cours d'exploitation.

24. Procédé selon la revendication 13 comprenant une étape pour intégrer des algorithmes à une architecture matérielle et logicielle support de services, apte à assurer un traitement délocalisé, sur le site d'un offreur de services, des données de présence/activité/état de la personne et des variables de réglage des états des systèmes, ou équipements, pilotés et télécharger sur une passerelle domotique située en local le programme le mieux adapté au rythme de vie des occupants.

25. Utilisation du procédé selon l'une quelconque des revendications 13 à 24, pour le contrôle du fonctionnement de systèmes/équipements, situés dans au moins une zone desdits locaux.

26. Utilisation du procédé selon l'une quelconque des revendications 13 à 24, pour la détection d'une situation anormale d'au moins un individu dans lesdits locaux.
